Europäisches Patentamt

European Patent Office

Office européen des brevets

(19)

(11) **EP 1 036 465 B1**

(12) **EUROPÄISCHE PATENTSCHRIFT**

(45) Veröffentlichungstag und Bekanntmachung des Hinweises auf die Patenterteilung:
**10.10.2001 Patentblatt 2001/41**

(51) Int Cl.[7]: **H04N 1/40**

(21) Anmeldenummer: **98966201.0**

(86) Internationale Anmeldenummer:
**PCT/DE98/03600**

(22) Anmeldetag: **08.12.1998**

(87) Internationale Veröffentlichungsnummer:
**WO 99/30482 (17.06.1999 Gazette 1999/24)**

(54) **VERFAHREN ZUR GRAVUR VON DRUCKZYLINDERN**

METHOD FOR OPERATING AN ENGRAVING MEMBER

PROCEDE DE MISE EN OEUVRE D'UN ORGANE DE GRAVURE

(84) Benannte Vertragsstaaten:
**BE DE ES FR GB IT NL**

(30) Priorität: **09.12.1997 DE 19754379**

(43) Veröffentlichungstag der Anmeldung:
**20.09.2000 Patentblatt 2000/38**

(73) Patentinhaber: **Heidelberger Druckmaschinen Aktiengesellschaft**
**69115 Heidelberg (DE)**

(72) Erfinder: **FANGMEYER, Dieter**
**D-24113 Kiel (DE)**

(56) Entgegenhaltungen:
**EP-A- 0 276 107    EP-A- 0 595 324**
**EP-A- 0 864 430    DE-A- 1 972 296**
**US-A- 5 450 211**

**Beschreibung**

Die Erfindung bezieht sich auf das Gebiet der elektronischen Reproduktionstechnik und betrifft ein Verfahren zur Gravur von Druckzylindern mittels eines Gravierorgans in einer elektronischen Graviermaschine zur Herstellung von Druckformen für den Tiefdruck.

In einer elektronischen Graviermaschine bewegt sich ein Gravierorgan mit einem Gravierstichel als Schneidwerkzeug in axialer Richtung an einem rotierenden Druckzylinder entlang. Der von einem Graviersignal gesteuerte Gravierstichel schneidet eine Folge von in einem Raster angeordneten Vertiefungen, Näpfchen genannt, in die Mantelfläche des Druckzylinders. Das Graviersignal wird aus der Überlagerung eines die Tonwerte zwischen "Licht" und "Tiefe" repräsentierenden Bildsignals mit einem periodischen Rastersignal gebildet. Während das Rastersignal eine vibrierende Hubbewegung des Gravierstichels zur Erzeugung des Rasters bewirkt, bestimmen die Bildsignalwerte entsprechend den wiederzugebenden Tonwerten die geometrischen Parameter wie beispielsweise die Querdiagonalen und Längsdiagonalen der gravierten Näpfchen.

Das Gravierorgan weist beispielsweise ein elektromagnetisches Antriebssystem für den Gravierstichel auf. Das elektromagnetische Antriebssystem besteht im wesentlichen aus einem mit dem Graviersignal beaufschlagten stationären Elektromagneten und einem Drehsystem, dessen Anker sich in dem Luftspalt des Elektromagneten bewegt. Das Drehsystem umfaßt den Anker, eine Ankerachse, ein Achsenlager und eine Dämpfungsvorrichtung. Ein Ende der Ankerachse ist als ein raumfest eingespannter Torsionsstab ausgebildet, während das andere Ende einen hebelartigen Stichelhalter für den Gravierstichel trägt. Das Gravierorgan weist außerdem einen mechanischen Gleitfuß und einen Schaber auf. Der Gleitfuß, der sich bei der Gravur auf dem Druckzylinder abstützt, sorgt für einen definierten Abstand zwischen dem Gravierorgan und der Mantelfläche des Druckzylinders. Der Schaber entfernt das beim Schneiden der Näpfchen entstehende Material von dem Druckzylinder. Durch das Graviersignal wird in dem Elektromagneten ein magnetisches Wechselfeld erzeugt. Das Wechselfeld übt auf den Anker ein wechselndes elektrische Drehmoment aus, dem das mechanische Drehmoment des Torsionsstabes entgegenwirkt. Das wechselnde elektrische Drehmoment lenkt die Welle um einen dem jeweiligen Graviersignalwert proportionalen Drehwinkel aus der durch den Torsionsstab definierten Ruhelage aus. Durch die Drehbewegung der Welle führt der Gravierstichel eine auf die Mantelfläche des Druckzylinders gerichtete Hubbewegung aus, welche die Eindringtiefe des Gravierstichels in den Druckzylinder und damit die geometrischen Parameter der gravierten Näpfchen bestimmt.

Das magnetische Wechselfeld im Elektromagneten erzeugt im Anker und im Joch des Elektromagneten Wirbelstromverluste, welche die Ankerachse und den Stichelhalter mit dem Gravierstichel erwärmen. Ursache für eine weitere Erwärmung des Gravierorgans sind Hystereseverluste im Joch und im Anker, Verluste durch die mechanischen Dämpfung des Drehsystems und ohmsche Verluste durch das Bildsignal als Anteil des Graviersignals.

Eine Änderung der Betriebstemperatur des Gravierorgan beeinflußt die Eindringtiefe des Gravierstichels in den Druckzylinder, und die Gravur von fehlerhaften Tonwerten ist die Folge.

Aus der DE-A-197 22 996 ist ein Verfahren zur Signalverarbeitung in einer elektronischen Graviermaschine bekannt, bei dem ein Bildsignal, welches die zu gravierenden Tonwerte repräsentiert, und ein Rastersignal zur Erzeugung eines Druckrasters nach einer durch Übertragungskoeffizienten definierten Übertragungsfunktion in ein Graviersignal zur Ansteuerung eines Gravierorgans umgewandelt werden.

Aus der EP-A- 0 595 324 ist ein Verfahren zur automatischen Kalibrierung des Graviersignals in einer elektronischen Graviermaschine bekannt, bei dem die gravierten Isttonwerte ausgemessen, mit vorgegebenen Solltonwerten verglichen und aus dem Vergleich Einstellwerte abgeleitet werden, mit denen das Graviersignal derart kalibriert wird, daß die Isttonwerte den Solltonwerten entsprechen. Aus beiden Druckschriften sind keinerlei Maßnahmen zur Kompensation der störenden Auswirkungen von Temperaturschwankungen in einem Gravierorgan auf die Tonwerte der gravierten Näpfchen bekannt.

Aufgabe der vorliegenden Erfindung ist es daher, ein Verfahren zur Gravur von Druckzylindern mittels eines Gravierorgans in einer elektronischen Graviermaschine derart zu verbessern, daß störende Auswirkungen von Temperaturänderungen im Gravierorgan auf die Tonwerte der gravierten Näpfchen kompensiert werden, um eine gute Gravierqualität zu erreichen.

Diese Aufgabe wird durch die Merkmale der Ansprüche 1, 9 oder 13 gelöst.

Vorteilhafte Ausgestaltungen und Weiterbildungen sind in den Unteransprüchen angegeben.

Die Erfindung wird nachfolgend anhand der Fig. 1 bis 5 näher erläutert.

Es zeigen:

Fig. 1     ein prinzipielles Blockschaltbild einer Graviermaschine zur Gravur von Druckzylindern,

Fig. 2     ein Ausführungsbeispiel für eine Signalaufbereitungsstufe,

Fig. 3    ein Ausführungsbeispiel für einen Signalprozessor zur Korrektur des Graviersignals,

Fig. 4    ein Ausführungsbeispiel für einen Signalprozessor zur Korrektur der Filterkoeffizienten eines Korrekturfilters und

Fig. 5    eine perspektivische Darstellung eines Gravierorgans.

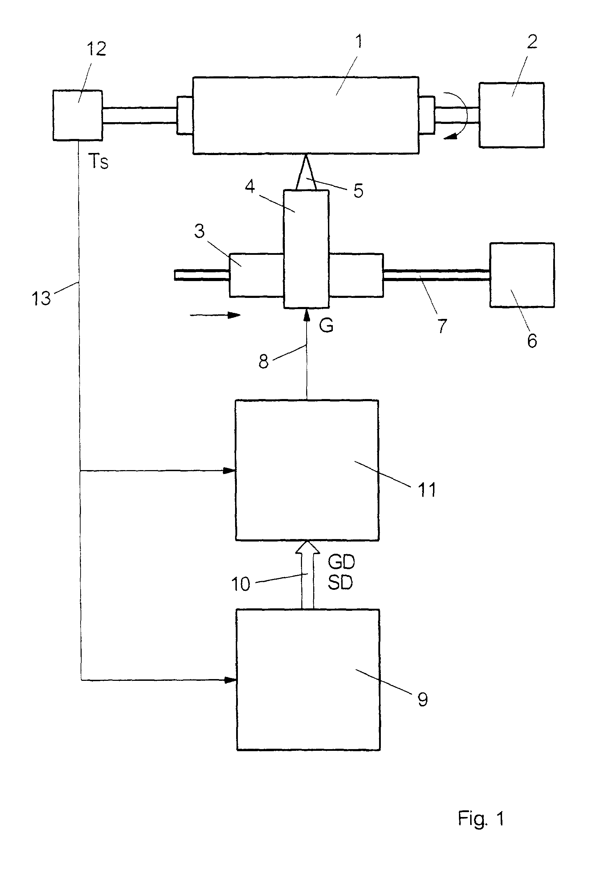

Fig. 1 zeigt ein prinzipielles Blockschaltbild einer Graviermaschine zur Gravur von Druckzylindern. Ein Druckzylinder (1) wird von einem Rotationsantrieb (2) rotatorisch angetrieben. Ein auf einem Gravierwagen (3) montiertes Gravierorgan (4) mit einem Gravierstichel (5) als Schneidwerkzeug bewegt sich mit Hilfe einer durch einen Vorschubantrieb (6) angetriebenen Spindel (7) in Achsrichtung an dem rotierenden Druckzylinder (1) entlang.

Der durch ein analoges Graviersignal G auf einer Leitung (8) gesteuerte Gravierstichel (5) des Gravierorgans (4) schneidet gravierlinienweise eine Folge von in einem Druckraster angeordneten Näpfchen in die Mantelfläche des rotierenden Druckzylinders (1), während sich der Gravierwagen (3) mit dem Gravierorgan (4) axial an dem Druckzylinder (1) entlang bewegt. Das Gravierorgan (4) ist beispielsweise als Gravierorgan mit einem elektromagnetischen Antrieb für den Gravierstichel (5) ausgebildet. Das Gravierorgan kann aber auch einen piezoelektrischen oder magnetostriktiven Antrieb haben.

Während ein periodisches Rastersignal eine vibrierende Hubbewegung des Gravierstichels (5) zur Erzeugung des Druckrasters bewirkt, bestimmen Gravurdaten GD als Bildsignalwerte entsprechend den zu gravierenden Tonwerten zwischen "Licht" und "Tiefe" die geometrischen Parameter wie Querdiagonalen und Längsdiagonalen der mit dem Gravierstichel (5) gravierten Näpfchen.

In einem Gravurdatenrechner (9) werden die Gravurdaten GD Gravierlinie für Gravierlinie erzeugt und außerdem Steuerdaten SD für die Signalaufbereitung bereitgestellt. Gravurdaten GD und Steuerdaten SD werden über einen Datenbus (10) an eine Signalverarbeitungsstufe (11) weitergegeben, in der das Graviersignal G für das Gravierorgan (4) erzeugt wird.

Zur Synchronisierung der Signalverarbeitung mit der Drehbewegung des Druckzylinders (1) ist ein Impulsgeber (12) mechanisch an den Druckzylinder (1) gekoppelt. Der Impulsgeber (12) erzeugt eine Synchronisierungstaktfolge $T_S$, die über eine Leitung (13) an den Gravurdatenrechner (9) und an die Signalaufbereitungsstufe (11) gegeben wird.

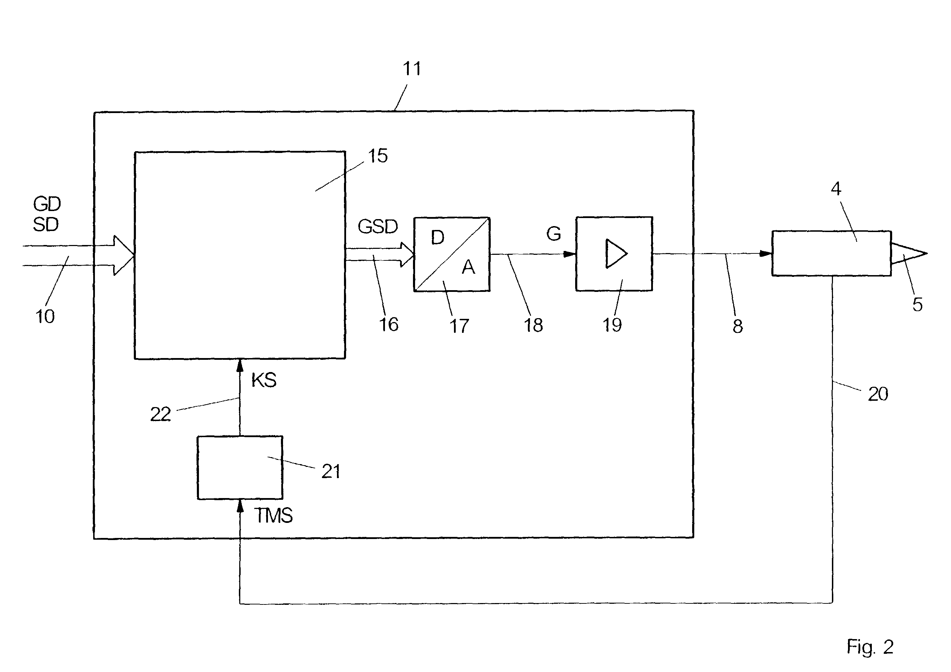

Fig. 2 zeigt ein Ausführungsbeispiel für die Signalaufbereitungsstufe (11).

In der Signalaufbereitungsstufe (11) werden die Gravurdaten GD und die Steuerdaten SD über den Datenbus (10 an einen Signalprozessor (15) übermittelt. In dem Signalprozessor (15) werden aus gespeicherten Funktionswertdaten FD das periodische Rastersignal zur Erzeugung des Druckrasters berechnet. In dem Signalprozessor (15) sind ferner in einer Look-Up-Table (LUT) Korrekturdaten KD für eine Schnittiefenkorrektur des Graviersignals G und Einstellwerte ($EP_{Licht}$, $EP_{Tiefe}$) für die Tonwerte "Licht" und "Tiefe" adressierbar abgelegt.

In dem Signalprozessor (15) werden die Gravurdaten (GD) numerisch in Gravursteuerdaten GSD nach folgender Übertragungsfunktion umgewandelt:

$$GSD = (GD \times k_1 + KD \times k_2) \times (EP_{Licht} \times k_4) + EP_{Tiefe} \times k_5 + FD \times k_3$$

In dieser Gleichung bedeuten:

GD =    Gravurdaten (Eingangsdaten)
GSD =    Graviersteuerdaten (Ausgangsdaten)
$EP_{Licht}$ =    Einstellwert für Tonwert "Licht"
$EP_{Tiefe}$ =    Einstellwert für Tonwert "Tiefe"
FD =    Funktionswertdaten
KD =    Korrekturdaten und
$k_x$ =    Übertragungskoeffizienten

Die aus dem Signalprozessor (15) ausgegebenen Gravursteuerdaten GSD gelangen über einen Datenbus (16) auf einen D/A-Wandler (17), der das analoge Graviersignal G auf einer Leitung (18) erzeugt. Das analoge Graviersignal G wird dann in einem nachgeschalteten analogen Gravierverstärker (19) verstärkt und über die Leitung (8) an das Gravierorgan (4) ausgegeben.

Signalprozessor (15) und Gravierverstärker (19) sind vorzugsweise nach der deutschen Patentveröffentlichung DE-A-197 22 996 ausgebildet.

Um den störenden Einfluß von Änderungen der Betriebstemperatur im Gravierorgan (4) auf die geometrischen Parameter und damit auf die Tonwerte der gravierten Näpfchen zu kompensieren, werden laufend die Betriebstemperatur des Gravierorgans (4) an mindestens einem Meßpunkt gemessen und in Abhängigkeit von der gemessenen Betriebstemperatur das Graviersignals G korrigiert und/oder mindestens eine Komponente des Gravierorgans (4) oder die das Gravierorgan (4) umströmende Luft erwärmt oder gekühlt.

Das Wärmeverhalten des Gravierorgans (4) wird nicht nur durch die Betriebstemperatur an einem einzelnen Ort, sondern durch die Wärmeverteilung an verschiedenen kritischen Orten des Gravierorgans (4) bestimmt, wobei die Wärmeverteilung von mehreren Faktoren abhängig ist, beispielsweise von den Werten des Graviersignals G. Um die Wärmeverteilung im Gravierorgan (4) möglichst gut zu erfassen, wird die Betriebstemperatur in vorteilhafter Weise an mehreren ausgewählten Meßorten im Gravierorgans (4) mittels geeigneter Temperatursensoren gemessen. Beispielsweise wird jeweils ein Temperatursensor an der Dämpfungsvorrichtung, am Anker des Drehsystems, am Gleitfuß und am Gehäuse des Gravierorgans (4) angebracht, weil unter anderem die Betriebstemperatur an der Dämpfungsvorrichtung das dynamische Verhalten des Gravierstichels (5) und die Betriebstemperatur des Ankers, des Gleitfußes und des Gehäuses die Graviertiefe der Näpfchen beeinflußt. Bei einem Gravierorgan mit einem piezoelektrischen oder magnetostriktiven Aktor kann es vorteilhaft sein, die Betriebstemperatur des Aktors selbst oder an einer Hebelübersetzung zwischen Aktor und Gravierstichel zu messen.

Die am Gravierorgan (4) gemessenen Betriebstemperaturen T werden als Temperaturmeßsignale TMS über eine Mehrfachleitung (20) an eine Auswertestufe (21) in der Signalaufbereitungsstufe (11) übermittelt, wobei die Übertragung der Temperaturmeßsignale TMS beispielsweise in zeitlichen Abständen erfolgen kann. In der Auswertestufe (21) werden aus den übermittelten Temperaturmeßsignalen TMS temperaturabhängige Korrektursignale KS zur Kompensation der störenden Temperatureffekte gebildet, die dem Signalprozessor (15) über eine Mehrfachleitung (22) übermittelt werden.

In einem ersten Beispiel erfolgt die Kompensation des Einflusses von Temperaturänderungen im Gravierorgan (4) auf die Tonwerte der gravierten Näpfchen, insbesondere auf die Graviertiefe von Näpfchen, welche den Tonwert "Tiefe" repräsentieren, dadurch, daß das Graviersignal G durch die temperaturabhängigen Korrektursignale KS korrigiert wird.

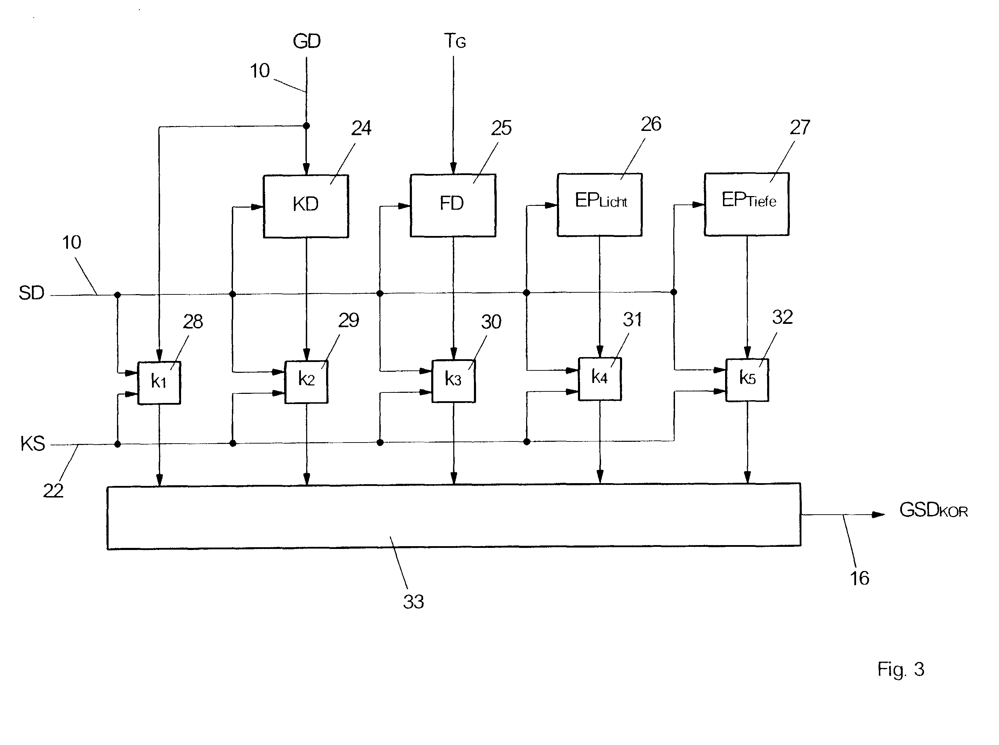

Fig. 3 zeigt ein entsprechendes Ausführungsbeispiel für den Signalprozessor (15) zur temperaturabhängigen Korrektur des Graviersignals G. Der Signalprozessor (15) weist zwei Tabellenspeicher (24, 25) und zwei Parameterspeicher (26, 27) auf. In dem ersten Tabellenspeicher (24) ist die Korrekturwerttabelle $KD = f(GD)$ für eine Schnittiefenkorrektur und in dem zweiten Tabellenspeicher (25) eine Funktionswerttabelle $FD = f(T_G)$ zur Erzeugung des Rastersignals geladen. Die Parameterspeicher (26, 27) enthalten die Einstellwerte $EP_{Licht}$ und $EP_{Tiefe}$ zur Kalibrierung der Tonwerte "Licht" und "Tiefe".

Der erste Tabellenspeicher (24) wird durch die Gravurdaten GD adressiert. Die Funktionswertdaten FD werden durch eine Graviertaktfolge $T_G$ aus dem zweiten Tabellenspeicher (25) ausgelesen. Die zur Kalibrierung erforderlichen Einstellwerte $EP_{Licht}$ und $EP_{Tiefe}$ werden durch die Steuerdaten SD aufgerufen. Die Gravurdaten GD auf dem Datenbus (10) und die aus den jeweiligen Speichern (24, 25, 26, 27) ausgelesenen Größen werden in Multiplizierstufen (28, 29, 30, 31, 32) mit den dort gespeicherten Übertragungskoeffizienten $k_x$ gewichtet. Die gewichteten Größen werden einem Rechner (33) zugeführt, in dem die Graviersteuerdaten GSD nach der Übertragungsfunktion wie folgt berechnet werden:

$$GSD = (GD \times k_1 + KD \times k_2) \times (EP_{Licht} \times k_4) + EP_{Tiefe} \times k_5 + FD \times k_3$$

Zur temperaturabhängigen Korrektur der Gravursteuerdaten GSD wird mindestens einer der Übertragungskoeffizienten $k_x$ in der oben angegebenen Übertragungsfunktion durch die Korrektursignale KS auf der Leitung (22) oder durch wählbare Anteile davon geändert und die korrigierten Gravursteuerdaten $GSD_{KOR}$ werden in das Graviersignal G zur Ansteuerung des Gravierorgans (4) umgewandelt.

In einem praktischen Anwendungsbeispiel werden die Betriebstemperatur $T_1$ der Dämpfungsvorrichtung und die Betriebstemperatur $T_2$ des Gleitfußes als Temperaturmeßsignale $TMS_1$ und $TMS_2$ an eine Auswertestufe (21) übermittelt, in der aus den Temperaturmeßsignalen $TMS_1$ und $TMS_2$ temperaturabhängige Korrektursignale KS gebildet werden.

Ein erstes Korrektursignal $KS_1$ wird aus der Temperaturdifferenz $\Delta T$ zwischen der Betriebstemperatur $T_1$ der Dämpfungsvorrichtung und der Betriebstemperatur $T_2$ des Gleitfußes sowie aus einem wählbaren ersten Temperaturfaktor $f_{T1}$ gemäß der Gleichung $KS_1 = f_{T1} \times \Delta T$ gebildet. Ein zweites Korrektursignal $KS_2$ wird aus der Betriebstemperatur $T_1$ der Dämpfungsvorrichtung und einem wählbaren zweiten Temperaturfaktor $f_{T2}$ gemäß der Gleichung $KS_2 = f_{T2} \times T_1$ erzeugt.

In dem Signalprozessor (15) werden dann in der oben genannten Übertragungsfunktion zur temperaturabhängigen Schnittiefenkorrektur für den Tonwert "Tiefe" der Übertragungskoeffizient $k_5$ durch das Korrektursignal $KS_1$ und zur temperaturabhängigen Korrektur des Rastersignals der Übertragungskoeffizient $k_3$ durch das Korrektursignal

KS$_2$ geändert.

In einem zweiten Beispiel erfolgt die Kompensation des Einflusses von Temperaturänderungen im Gravierorgan (4) auf die Tonwerte der gravierten Näpfchen dadurch, daß die Filterkoeffizienten eines digitalen Korrekturfilters im Signalweg der Gravurdaten GD durch ein temperaturabhängiges Korrektursignal KS korrigiert werden. Solche digitalen Korrekturfilter werden eingesetzt, um störende Effekte eines elektromagnetischen Gravierorgans wie der Nachzieheffekt und der Prelleffekt zu minimieren.

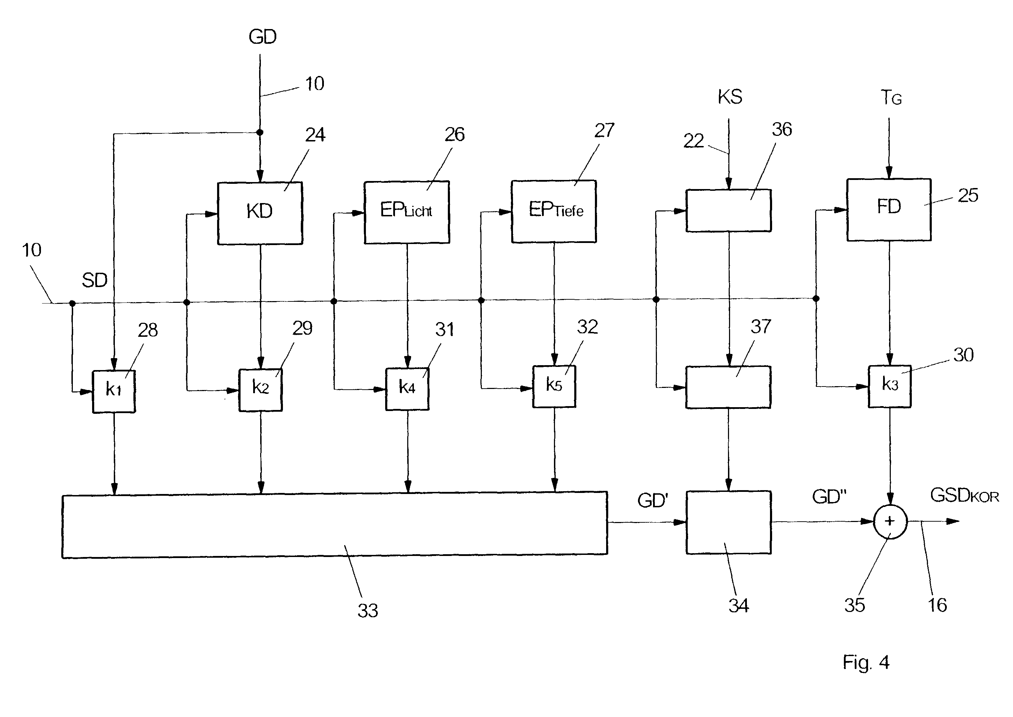

Fig. 4 zeigt ein entsprechendes Ausführungsbeispiel für den Signalprozessor (15) zur temperaturabhängigen Korrektur der Filterkoeffizienten eines digitalen Korrekturfilters. Der Signalprozessor (15) nach Fig. 4 unterscheidet sich von dem Signalprozessor (15) nach Fig. 3 durch ein digitales Korrekturfilter (34) und einen nachgeschalteten Addierer (35) im Signalweg der Gravurdaten GD.

In dem Rechner (33) werden die Gravurdaten GD zunächst gemäß der Gleichung (I) modifiziert.

$$GD' = (GD \times k_1 + KD \times k_2) \times (EP_{Licht} \times k_4) + EP_{Tiefe} \times k_5 \qquad (I)$$

Die modifizierten Gravurdaten GD' werden dem Korrekturfilter (34) zugeführt. In dem Korrekturfilter (34) werden die modifizierten Gravurdaten (GD') zur linearen Kompensation der störenden Effekte des Gravierorgans (4), wie der Prell- und Nachzieheffekt, einer digitalen Filterung nach einer Filterfunktion mit statistischen Filterkoeffizienten $a_n$ und $b_n$ unterzogen, um die korrigierten und gefilterten Gravurdaten GD" zu erhalten.

Die Filterkoeffizienten an und $b_n$ werden in einem Koeffizientenrechner (36) berechnet und in einen Koeffizientenspeicher (37) übertragen, von dem sie in das Korrekturfilter (34) eingegeben werden. Die Berechnung der erforderlichen Filterkoeffizienten $a_n$ und $b_n$ wird mit Hilfe von Berechnungsparametern durchgeführt, die dem Koeffizientenrechner (36) über die Steuerdaten SD zugeführt werden.

Zur temperaturabhängigen Korrektur der Filterkoeffizienten $a_n$ und $b_n$ wird dem Koeffizientenrechner (36) das entsprechende Korrektursignal KS, vorzugsweise das aus der Betriebstemperatur $T_1$ der Dämpfungsvorrichtung abgeleitete zweite Korrektursignal KS$_2$, zugeführt, wodurch temperaturabhängige Schwankungen der Dämpfungseigenschaften durch Einflußnahme auf das Entprellen und das Nachziehen des Gravierorgans (4) im Graviersignals G kompensiert werden.

Die korrigierten Gravursteuerdaten GDS$_{KOR}$ werden dann durch Addition gemäß der Gleichung (II) gewonnen:

$$GDS_{KOR} = GD'' + FD \times k_3 \qquad (II)$$

Der Signalprozessor (15) mit dem digitalen Korrekturfilter (34) ist vorzugsweise nach der deutschen Patentveröffentlichung DE-A-197 23 002 ausgebildet.

In einem dritten Beispiel erfolgt die Kompensation des Einflusses von Temperaturänderungen im Gravierorgan (4) auf die Tonwerte der gravierten Näpfchen dadurch, daß Komponenten des Gravierorgans (4) oder die das Gravierorgan (4) umströmende Luft in Abhängigkeit von den im Gravierorgan gemessenen Betriebstemperaturen erwärmt oder gekühlt wird. Dabei kann die Kühlung und/oder Erwärmung auf eine definierte Temperatur oder auf eine definierte Temperaturdifferenz zur Umgebungstemperatur erfolgen. Dieses Beispiel kann insbesondere dann Anwendung finden, wenn gefordert ist, daß die Betriebstemperatur der Dämpfungsvorrichtung des Gravierorgans (4) konstant gehalten werden soll. Dadurch werden Temperaturschwankungen an denjenigen Bauteilen des Gravierorgans, welche die störenden Auswirkungen auf die Gravierqualität verursachen, in vorteilhafter Weise verkleinert. Ein weiterer Vorteil einer Luftkühlung des Gravierorgans (4) besteht darin, daß das Gravierorgan (4) bei Gravierbeginn schneller einen stabilen Betriebszustand einnimmt, weil der Wärmetransport durch strömende Luft besser als durch eine Wärmeleitung im Metall ist.

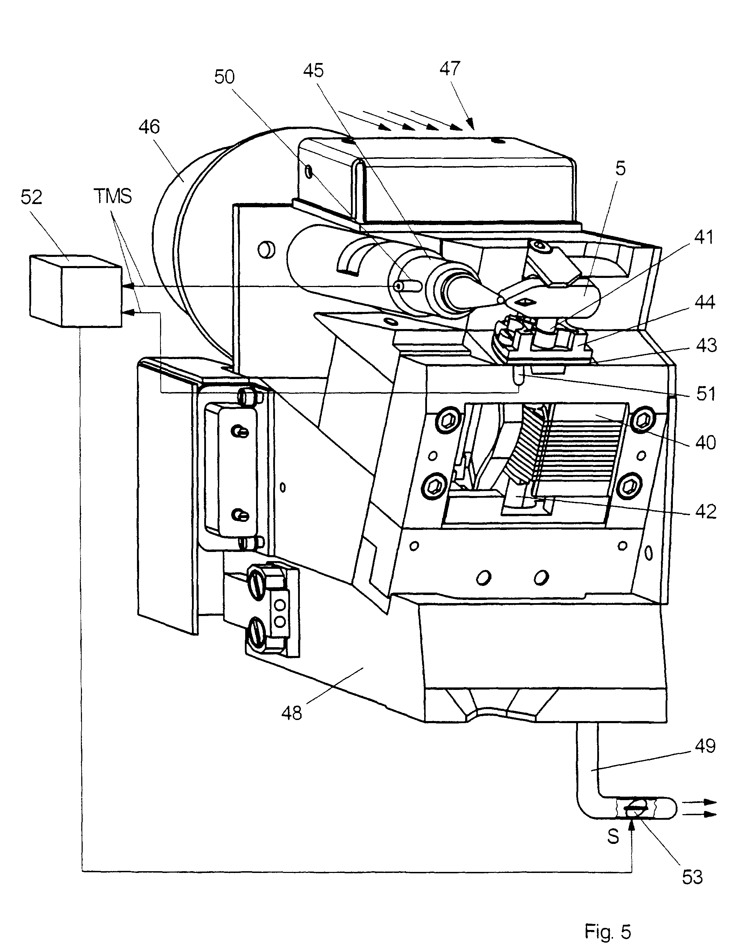

Fig. 5 zeigt eine perspektivische Darstellung des Gravierorgans (4) mit dem elektromagnetischen Antriebssystem (40) und dem Drehsystem, das im wesentlichen aus einer Welle (41), einem Torsionsstab (42), einer Dämpfungsvorrichtung (43), einem Drehfederlager (44) und dem Gravierstichel (5) besteht. Außerdem ist ein Gleitfuß (45) dargestellt, der durch einen Drehknopf (46) axial verstellbar ist, um den Abstand zwischen Gravierstichel (5) und der Mantelfläche des Druckzylinders (1) zu variieren und zu fixieren.

Zur Kühlung der Komponenten des Gravierorgans (4) tritt Luft durch ein an der Rückseite des Gravierorgans (4) befindliches Eintrittsfenster (47) in das nicht dargestellte Gehäuse des Gravierorgans (5) ein, und die erwärmte Luft wird durch einen in einer Grundplatte (48) befindlichen Luftkanal (49) abgesaugt.

Zur Messung der Betriebstemperatur des Gravierorgans (4) sind an dem Gleitfuß (45) und an der Dämpfungsvorrichtung (43) Temperatursensoren (50, 51) angebracht, deren Temperaturmeßsignale TMS an eine Steuerstufe (52) gegeben werden. In der Steuerstufe (52) wird in Abhängigkeit von den Temperaturmeßsignalen TMS ein Steuersignal S erzeugt. In dem dargestellten Ausführungsbeispiel betätigt das Steuersignal S eine in dem Luftkanal (49) befindliche Drosselklappe (53), um den Luftstrom durch das Gravierorgan (4) zu beeinflussen.

In einer Weiterbildung kann die Temperatur der das Gravierorgan (4) umströmenden Luft durch Kühl- und/oder Heizelemente verändert werden, die durch das Steuersignal S steuerbar sind. In einer anderen Weiterbildung können Kühl- und/oder Heizelemente direkt an den relevanten Komponenten des Gravierorgans (4) angebracht werden, die ebenfalls von dem Steuersignal S geregelt werden. Bei einer weiteren Ausgestaltung kann das Gravierorgan (4) vor Gravierbeginn und/oder während Gravierunterbrechungen durch ein durch das Gravierorgan (4) fließendes Hilfssignal oder mittels einer Heizspule erwärmt werden.

## Patentansprüche

1. Verfahren zur Gravur von Druckzylindern mittels eines Gravierorgans in einer elektronischen Graviermaschine, bei dem

   - ein durch ein Graviersignal (G) gesteuerter Gravierstichel (5) eines Gravierorgans (4) in einem Druckraster angeordnete Näpfchen in einen rotierenden Druckzylinder (1) graviert und
   - ein Bildsignal, welches die Tonwerte der zu gravierenden Näpfchen zwischen "Licht" und "Tiefe" repräsentiert, und ein periodisches Rastersignal zur Erzeugung des Druckrasters nach einer Übertragungsfunktion in das Graviersignal (G) umgewandelt werden, **dadurch gekennzeichnet, daß** zur Kompensation des störenden Einflusses von Betriebstemperaturänderungen des Gravierorgans (4) auf die Tonwerte der Näpfchen
   - die Betriebstemperatur (T) im Gravierorgan (4) an mindestens einem Meßort gemessen wird und
   - das Graviersignal (G) zur Kompensation der Betriebstemperaturänderungen korrigiert wird, indem mindestens ein Übertragungskoeffizient ($k_x$) der Übertragungsfunktion in Abhängigkeit von mindestens einer gemessenen Betriebstemperatur (T) geändert wird.

2. Verfahren nach Anspruch 1, **dadurch gekennzeichnet, daß**

   - Bildsignal und Rastersignal nach der Übertragungsfunktion unter Berücksichtigung von zur Kalibrierung verwendeten Einstellwerten ($EP_{Licht}$, $EP_{Tiefe}$) für die Tonwerte "Licht und "Tiefe" umgewandelt werden und
   - der dem Einstellwert ($EP_{Tiefe}$) zugeordnete Übertragungskoeffizient ($k_5$) in Abhängigkeit von mindestens einer gemessenen Betriebstemperatur (T) geändert wird.

3. Verfahren nach Anspruch 1 oder 2, **dadurch gekennzeichnet, daß** die Betriebstemperatur (T) an einer Dämpfungsvorrichtung (43) des Gravierorgans (4) gemessen wird.

4. Verfahren nach Anspruch 1 oder 2, **dadurch gekennzeichnet, daß** die Betriebstemperatur (T) an einem Gleitfuß (45) des Gravierorgans (4) gemessen wird.

5. Verfahren nach mindestens einem der Ansprüche 1 bis 4, **dadurch gekennzeichnet, daß**

   - die Betriebstemperatur ($T_1$) der Dämpfungsvorrichtung (43) und die Betriebstemperatur ($T_2$) des Gleitfußes (45) des Gravierorgans (4) gemessen wird,
   - aus der Differenz der gemessenen Betriebstemperaturen ($T_1$, $T_2$) ein Korrektursignal (KS) gebildet wird und
   - der dem Einstellwert ($EP_{Tiefe}$) für den Tonwert "Tiefe" zugeordnete Übertragungskoeffizient ($k_5$) der Übertragungsfunktion durch das Korrektursignal (KS) geändert wird.

6. Verfahren nach mindestens einem der Ansprüche 1 bis 5, **dadurch gekennzeichnet, daß**

   - die Betriebstemperatur ($T_1$) der Dämpfungsvorrichtung (43) des Gravierorgans (4) gemessen wird,
   - aus der gemessenen Betriebstemperatur ($T_1$) ein Korrektursignal (KS) gebildet wird und
   - der dem Rastersignal zugeordnete Übertragungskoeffizient ($k_3$) der Übertragungsfunktion durch das Korrektursignal (KS) geändert wird.

7. Verfahren nach mindestens einem der Ansprüche 1 bis 5, **dadurch gekennzeichnet, daß**

   - das Bildsignal als Gravurdaten (GD) und das Rastersignal als Funktionswertdaten (FD) vorliegen,

- die Betriebstemperatur ($T_1$) der Dämpfungsvorrichtung (43) des Gravierorgans (4) gemessen wird,
- aus der gemessenen Betriebstemperatur ($T_1$) ein Korrektursignal (KS) gebildet wird und
- der den Funktionswertdaten (FD) zugeordnete Übertragungskoeffizient (k3) durch das Korrektursignal (KS) geändert wird.

8. Verfahren nach einem der Ansprüche 1 bis 7, **dadurch gekennzeichnet, daß**

- das Bildsignal als Gravurdaten (GD) und das Rastersignal als Funktionswertdaten (FD) vorliegen und
- die Umwandlung der Gravurdaten (GD), der Funktionswertdaten (FD) und der Einstellwerte ($EP_{Licht}$, $EP_{Tiefe}$) für die Tonwerte "Licht und "Tiefe" in ein Graviersignal (G) nach der Übertragungsfunktion: $G = (GD \times k_1 \times EP_{Licht} \times k_4) + EP_{Tiefe} \times k_5 + FD \times k_3$ erfolgt.

9. Verfahren zur Gravur von Druckzylindern mittels eines Gravierorgans in einer elektronischen Graviermaschine, bei dem

- ein durch ein Graviersignal (G) gesteuerter Gravierstichel (5) eines Gravierorgans (4) in einem Druckraster angeordnete Näpfchen in einen rotierenden Druckzylinder (1) graviert und
- das Graviersignal (G) aus der Überlagerung eines Bildsignals, welches die Tonwerte der zu gravierenden Näpfchen zwischen "Licht" und "Tiefe" repräsentiert, und einem periodischen Rastersignal zur Erzeugung des Druckrasters gebildet wird, **dadurch gekennzeichnet, daß** zur Kompensation des störenden Einflusses von Betriebstemperaturänderungen des Gravierorgans (4) auf die Tonwerte der Näpfchen
- das Bildsignal vor der Überlagerung mit dem Rastersignal gefiltert und das gefilterte Bildsignal nach der Überlagerung mit dem Rastersignal als Graviersignal (G) verwendet wird,
- die Betriebstemperatur (T) im Gravierorgan (4) an mindestens einem Meßort gemessen wird und
- das Graviersignal (G) zur Kompensation der Betriebstemperaturänderungen korrigiert wird, indem die Filterfunktion in Abhängigkeit von mindestens einer gemessenen Betriebstemperatur (T) geändert wird.

10. Verfahren nach Anspruch 9, **dadurch gekennzeichnet, daß**

- das Bildsignal als Gravurdaten (GD) und das Rastersignal als Funktionswertdaten (FD) vorliegen,
- die Gravurdaten (GD) vor der Überlagerung mit den Funktionswertdaten (FD) einer digitalen Filterung nach einer durch Filterkoeffizienten ($a_n$, $b_n$) vorgegebenen Filterfunktion unterzogen werden und
- mindestens ein Filterkoeffizient ($a_n$, $b_n$) in Abhängigkeit von mindestens einer gemessenen Betriebstemperatur (T) korrigiert wird.

11. Verfahren nach Anspruch 9 oder 10, **dadurch gekennzeichnet, daß** die digitale Filterung der Gravurdaten (GD) mit einem digitalen FIR-Korrekturfilter (34) mindestens 2. Ordnung durchgeführt wird.

12. Verfahren nach Anspruch 9 oder 10, **dadurch gekennzeichnet, daß** die digitale Filterung der Gravurdaten (GD) mit einem digitalen IIR-Korrekturfilter (34) mindestens 2. Ordnung durchgeführt wird.

13. Verfahren zur Gravur von Druckzylindern mittels eines Gravierorgans in einer elektronischen Graviermaschine, bei dem

- ein durch ein Graviersignal (G) gesteuerter Gravierstichel (5) des Gravierorgans (4) in einem Druckraster angeordnete Näpfchen in den rotierenden Druckzylinder (1) graviert und
- das Graviersignal (G) aus der Überlagerung eines Bildsignals, welches die Tonwerte der zu gravierenden Näpfchen zwischen "Licht" und "Tiefe" repräsentiert, mit einem periodischen Rastersignal zur Erzeugung des Druckrasters gebildet wird, **dadurch gekennzeichnet, daß** zur Kompensation des störenden Einflusses von Betriebstemperaturänderungen des Gravierorgans (4) auf die Tonwerte der Näpfchen
- die Betriebstemperatur (T) im Gravierorgan (4) an mindestens einem Meßort gemessen wird und
- die Temperatur mindestens einer Komponente des Gravierorgans (4) und/oder der Luft, die das Gravierorgan (4) umströmt, in Abhängigkeit von mindestens einer gemessenen Betriebstemperatur (T) geändert wird.

14. Verfahren nach Anspruch 13, **dadurch gekennzeichnet, daß** die Temperatur der Komponente und/oder der Luft durch Kühlung oder Erwärmung geändert wird.

**15.** Verfahren nach Anspruch 13, **dadurch gekennzeichnet, daß** die Temperatur der Komponente des Gravierorgans (4) durch ein Kühl- und/oder Heizelement geändert wird, das in Abhängigkeit von mindestens einer gemessenen Betriebstemperatur (T) gesteuert wird.

**16.** Verfahren nach Anspruch 13, **dadurch gekennzeichnet, daß**

- die das Gravierorgan (4) umströmende Luft in einem Luftkanal (49) zu- und abgeführt wird und
- die Temperatur der Luft mittels einer in dem Luftkanal (49) befindlichen Drosselklappe (53) geändert wird, die in Abhängigkeit von mindestens einer gemessenen Betriebstemperatur (T) gesteuert wird.

**Claims**

**1.** Method for engraving printing cylinders by means of an engraving member in an electronic engraving machine in which

- an engraving stylus (5) of an engraving member (4), controlled by an engraving signal (G), engraves depressions arranged in a printing raster in a rotating printing cylinder (1) and
- an image signal, which represents the hue values of the depressions to be engraved between "light" and "depth", and a periodic raster signal for producing the printing raster are converted into the engraving signal (G) in accordance with a transmission function, **characterised in that** in order to compensate for the interfering effect of changes in the operating temperature of the engraving member (4) on the hue values of the depressions
- the operating temperature (T) in the engraving member (4) is measured at at least one measuring point and
- the engraving signal (G) is corrected to compensate for changes in the operating temperature by changing at least one transmission coefficient ($k_x$) of the transmission function as a function of at least one measured operating temperature (T).

**2.** Method according to Claim 1, **characterised in that**

- the image signal and raster signal are converted in accordance with the transmission function taking account of the setting values ($EP_{light}$, $EP_{depth}$) used for calibration of the hue values "light" and "depth" and
- the transmission coefficient ($k_5$) assigned to the setting value ($EP_{depth}$) is changed as a function of at least one measured operating temperature (T).

**3.** Method according to Claim 1 or 2, **characterised in that** the operating temperature (T) is measured at a damping device (43) of the engraving member (4).

**4.** Method according to Claim 1 or 2, **characterised in that** the operating temperature (T) is measured at a sliding foot (45) of the engraving member (4).

**5.** Method according to at least one of Claims 1 to 4, **characterised in that**

- the operating temperature ($T_1$) of the damping device (43) and the operating temperature ($T_2$) of the sliding foot (45) of the engraving member (4) are measured,
- a correction signal (KS) is formed from the difference between the measured operating temperatures ($T_1$, $T_2$) and
- the transmission coefficient ($k_5$) of the transmission function assigned to the setting value ($EP_{depth}$) for the hue value "depth" is changed by the correction signal (KS).

**6.** Method according to at least one of Claims 1 to 5, **characterised in that**

- the operating temperature ($T_1$) of the damping device (43) of the engraving member (4) is measured,
- a correction signal (KS) is formed from the measured operating temperature ($T_1$) and
- the transmission coefficient ($k_3$) of the transmission function assigned to the raster signal is changed by the correction signal (KS).

**7.** Method according to at least one of Claims 1 to 5, **characterised in that**

- the image signal is present in the form of engraving data (GD) and the raster signal in the form of function value data (FD),
- the operating temperature ($T_1$) of the damping device (43) of the engraving member (4) is measured,
- a correction signal (KS) is formed from the measured operating temperature ($T_1$) and
- the transmission coefficient (k3) assigned to the function value data (FD) is changed by the correction signal (KS).

8. Method according to one of Claims 1 to 7, **characterised in that**

   - the image signal is present in the form of engraving data (GD) and the raster signal in the form of function value data (FD) and
   - the conversion of the engraving data (GD), the function value data (FD) and the setting values ($EP_{light}$, $EP_{depth}$) for the hue values "light" and "depth" into an engraving signal (G) ensues in accordance with the transmission function: $G = (GD \times k_1 \times EP_{light} \times k_4) + EP_{depth} \times k_5 + FD \times k_3$.

9. Method for engraving printing cylinders by means of an engraving member in an electronic engraving machine in which

   - an engraving stylus (5) of an engraving member (4), controlled by an engraving signal (G), engraves depressions arranged in a printing raster in a rotating printing cylinder (1) and
   - the engraving signal (G) is formed from the superposition of an image signal, which represents the hue values of the depressions to be engraved between "light" and "depth", and a periodic raster signal for producing the printing raster, **characterised in that** in order to compensate for the interfering effect of changes in the operating temperature of the engraving member (4) on the hue values of the depressions
   - prior to superposition with the raster signal the image signal is filtered and the filtered image signal is used after superposition with the raster signal as the engraving signal (G),
   - the operating temperature (T) in the engraving member (4) is measured at at least one measuring point and
   - the engraving signal (G) is corrected to compensate for changes in the operating temperature by changing the filter function as a function of at least one measured operating temperature (T).

10. Method according to Claim 9, **characterised in that**

    - the image signal is present in the form of engraving data (GD) and the raster signal in the form of function value data (FD),
    - prior to superposition with the function value data (FD) the engraving data (GD) are subjected to digital filtering in accordance with a filter function specified by filter coefficients ($a_n$, $b_n$) and
    - at least one filter coefficient ($a_n$, $b_n$) is corrected as a function of at least one measured operating temperature (T).

11. Method according to Claim 9 or 10, **characterised in that** the digital filtering of the engraving data (GD) is carried out using a digital FIR correction filter (34) of at least the second order.

12. Method according to Claim 9 or 10, **characterised in that** the digital filtering of the engraving data (GD) is carried out using a digital IIR correction filter (34) of at least the second order.

13. Method for engraving printing cylinders by means of an engraving member in an electronic engraving machine in which

    - an engraving stylus (5) of an engraving member (4), controlled by an engraving signal (G), engraves depressions arranged in a printing raster in the rotating printing cylinder (1) and
    - the engraving signal (G) is formed from the superposition of an image signal, which represents the hue values of the depressions to be engraved between "light" and "depth", with a periodic raster signal for producing the printing raster, **characterised in that** in order to compensate for the interfering effect of changes in the operating temperature of the engraving member (4) on the hue values of the depressions
    - the operating temperature (T) in the engraving member (4) is measured at at least one measuring point and
    - the temperature of at least one component of the engraving member (4) and/or the air flowing round the engraving member (4) is changed as a function of at least one measured operating temperature (T).

**14.** Method according to Claim 13, **characterised in that** the temperature of the component and/or air is altered by cooling or heating.

**15.** Method according to Claim 13, **characterised in that** the temperature of the component of the engraving member (4) is altered by means of a cooling and/or heating element which is controlled as a function of at least one measured operating temperature.

**16.** Method according to Claim 13, **characterised in that**

- the air flowing round the engraving member (4) is fed in and carried away in an air duct (49) and
- the temperature of the air is altered by means of a throttle valve (53) located in the air duct (49) which is controlled as a function of at least one measured operating temperature (T).

**Revendications**

**1.** Procédé de gravure de cylindres d'impression à l'aide d'un organe de gravure dans une machine de gravure électronique, selon lequel :

- un poinçon de gravure (5) d'un organe de gravure (4) est commandé par un signal de gravure (G) pour assurer la gravure de cuvettes réparties suivant une trame d'impression dans un cylindre d'impression (1) en rotation, et
- un signal d'image qui représente les valeurs de teintes des cuvettes à graver, entre « lumière » et « profondeur » et un signal de trame périodique pour générer la trame d'impression sont transformés selon une fonction de transfert en un signal de gravure (G),

  **caractérisé en ce que**
  pour compenser l'influence perturbatrice des variations de température de l'organe de gravure (4) sur la valeur de teinte des cuvettes,

- on mesure la température de fonctionnement (T) de l'organe de gravure (4) en au moins un emplacement de mesure et
- on corrige le signal de gravure (G) pour compenser les variations de température de fonctionnement en modifiant au moins un coefficient de transfert ($k_x$) de la fonction de transfert en fonction d'au moins une température de fonctionnement (T), mesurée.

**2.** Procédé selon la revendication 1,
**caractérisé en ce qu'**

- on transforme le signal d'image et le signal de trame selon la fonction de transfert en tenant compte de valeurs de réglage utilisées pour le calibrage ($EP_{Lum}$, $EP_{Prof}$) pour les valeurs de teintes « lumière » et « profondeur » et
- on modifie le coefficient de transfert ($k_5$) associé à la valeur de réglage ($EP_{Prof}$) en fonction d'au moins une température de fonctionnement mesurée (T).

**3.** Procédé selon l'une quelconque des revendications 1 ou 2,
**caractérisé en ce qu'**
on mesure la température de fonctionnement (T) sur un dispositif d'amortissement (43) de l'organe de gravure (4).

**4.** Procédé selon la revendication 1 ou 2,
**caractérisé en ce qu'**
on mesure la température de fonctionnement (T) sur un patin (45) de l'organe de gravure (4).

**5.** Procédé selon au moins l'une quelconque des revendications 1 à 4,
**caractérisé en ce qu'**

- on mesure la température de fonctionnement ($T_1$) du dispositif d'amortissement (43) et la température de fonctionnement ($T_2$) du patin (45) de l'organe de gravure (4),
- à partir de la différence entre les températures de fonctionnement mesurées ($T_1$, $T_2$) on forme un signal de correction (KS) et

- on modifie le coefficient de transfert ($k_5$) de la fonction de transfert associé à la valeur de réglage ($EP_{Prof}$) pour la valeur de teinte « profondeur » par le signal de correction (KS).

6. Procédé selon au moins l'une quelconque des revendications 1 à 5,
**caractérisé en ce qu'**

- on mesure la température de fonctionnement ($T_1$) du dispositif amortisseur (43) de l'organe de gravure (4),
- à partir de la température de fonctionnement mesurée ($T_1$) on forme un signal de correction (KS) et
- on modifie le coefficient de transfert ($k_3$) de la fonction de transfert associé au signal de trame par le signal de correction (KS).

7. Procédé selon au moins l'une quelconque des revendications 1 à 5,
**caractérisé en ce que**

- le signal d'image existe sous forme de données de gravure (GD) et le signal de trame comme données de valeurs fonctionnelles (FD),
- on mesure la température de fonctionnement ($T_1$) du dispositif d'amortissement (43) de l'organe de gravure (4),
- à partir de la température de fonctionnement mesurée ($T_1$) on forme un signal de correction (KS) et
- on modifie, par le signal de correction (KS), le coefficient de transfert (k3) associé aux données des valeurs fonctionnelles (FD).

8. Procédé selon au moins l'une quelconque des revendications 1 à 7,
**caractérisé en ce que**

- le signal d'image est sous la forme de données de gravure (GD) et le signal de trame sous la forme de données de valeurs fonctionnelles (FD) et
- la conversion des données de gravure (GD), des données de valeurs fonctionnelles (FD) et des valeurs de réglage ($EP_{Lum}$, $EP_{prof}$) pour les valeurs de teintes « lumière » et « profondeur » dans un signal de gravure (G) se fait suivant la fonction de transfert :

$$G = (GD \times k_1 \times EP_{Lum} \times k_4) + EP_{Prof} \times k_5 + FD \times k_3$$

9. Procédé de gravure de cylindres d'impression à l'aide d'un organe de gravure dans une machine de gravure électronique selon lequel :

- un poinçon de gravure (5) d'un organe de gravure (4) est commandé par un signal de gravure (G), pour graver des cuvettes réparties suivant une trame d'impression dans un cylindre d'impression (1) en rotation et
- on forme le signal de gravure (G) par la superposition d'un signal d'image représentant les valeurs de teintes des cuvettes à graver « lumière » et « profondeur », et d'un signal de trame périodique pour générer la trame d'impression,

**caractérisé en ce que**
pour compenser l'influence perturbatrice des variations de température de l'organe de gravure (4) sur les valeurs de teintes des cuvettes,

- on filtre le signal d'image avant de le combiner au signal de trame et on utilise comme signal de gravure (G) le signal image filtré, après combinaison avec le signal de trame.
- on mesure la température de fonctionnement (T) de l'organe de gravure (4) en au moins un emplacement de mesure et
- on corrige le signal de gravure (G) pour compenser les variations de température de fonctionnement en modifiant la fonction de filtre en fonction d'au moins une température de fonctionnement mesurée (T).

10. Procédé selon la revendication 9,
**caractérisé en ce que**

- le signal d'image est sous la forme de données de gravure (GD) et le signal de trame sous la forme de données de valeurs fonctionnelles (FD),

- on soumet les données de gravure (GD) avant leur combinaison avec les données de valeurs fonctionnelles (FD) à un filtrage numérique selon une fonction de filtre prédéterminée par des coefficients de filtre ($a_n$, $b_n$) et
- on corrige au moins un coefficient de filtre ($a_n$, $b_n$) en fonction d'au moins une température de fonctionnement mesurée (T).

11. Procédé selon l'une quelconque des revendications 9 ou 10,
   **caractérisé en ce qu'**
   on effectue le filtrage numérique des données de gravure (GD) à l'aide d'un filtre de correction FIR (34) numérique au moins du second ordre.

12. Procédé selon l'une quelconque des revendications 9 ou 10,
   **caractérisé en ce qu'**
   on effectue le filtrage numérique des données de gravure (GD) avec un filtre de correction IIR numérique (34) au moins du deuxième ordre.

13. Procédé de gravure de cylindres d'impression à l'aide d'un organe de gravure dans une machine de gravure électronique selon lequel :

   - un poinçon de gravure (5) d'un organe de gravure (4) est commandé par un signal de gravure (G) pour graver des cuvettes réparties suivant une trame d'impression dans un cylindre d'impression en rotation (1) et
   - on forme le signal de gravure (G) par la combinaison d'un signal d'image qui représente les valeurs de teintes des cuvettes à graver entre « lumière » et « profondeur », avec un signal de trame périodique pour générer la trame d'impression,

   **caractérisé en ce que**
   pour compenser l'influence perturbatrice des variations de température de fonctionnement de l'organe de gravure (4) sur les valeurs de teintes des cuvettes,

   - on mesure la température de fonctionnement (T) de l'organe de gravure (4) en au moins un emplacement de mesure et
   - on modifie la température d'au moins un composant de l'organe de gravure (4) et/ou de l'air qui balaye l'organe de gravure (4) en fonction d'au moins une température de fonctionnement (T), mesurée.

14. Procédé selon la revendication 13,
   **caractérisé en ce qu'**
   on modifie la température des composants et/ou de la lumière par refroidissement ou échauffement.

15. Procédé selon la revendication 13,
   **caractérisé en ce qu'**
   on modifie la température des composants de l'organe de gravure (4) par un élément de refroidissement et/ou de chauffage commandé en fonction d'au moins une température de fonctionnement mesurée (T).

16. Procédé selon la revendication 13,
   **caractérisé en ce qu'**

   - on évacue ou on fournit l'air balayant l'organe de gravure (4) par un canal à air (49) et
   - on modifie la température de l'air à l'aide d'un volet d'étranglement (53) qui se trouve dans un canal d'air (49), ce volet étant commandé en fonction d'au moins une température de fonctionnement mesurée (T).

Fig. 1

Fig. 2

EP 1 036 465 B1

Fig. 3

Fig. 4

Fig. 5

17